Europäisches Patentamt

European Patent Office

Office européen des brevets

(19)

(11) Veröffentlichungsnummer : **0 052 210**
**B1**

(12) **EUROPÄISCHE PATENTSCHRIFT**

(45) Veröffentlichungstag der Patentschrift :
18.09.85

(21) Anmeldenummer : 81107883.1

(22) Anmeldetag : 03.10.81

(51) Int. Cl.⁴ : **H 01 F 1/11, C 01 G 49/00,**
**G 11 B 5/70**

(54) Verfahren zur Herstellung von feinteiligem hochkoerzitivem Bariumferrit.

(30) Priorität : 14.11.80 DE 3042959

(43) Veröffentlichungstag der Anmeldung :
26.05.82 Patentblatt 82/21

(45) Bekanntmachung des Hinweises auf die Patenterteilung : 18.09.85 Patentblatt 85/38

(84) Benannte Vertragsstaaten :
DE FR GB NL

(56) Entgegenhaltungen :
DE-A- 1 948 114
FR-A- 1 081 522
FR-A- 2 242 347

(73) Patentinhaber : BASF Aktiengesellschaft
Carl-Bosch-Strasse 38
D-6700 Ludwigshafen (DE)

(72) Erfinder : Hibst, Hartmut, Dr.
Sternstrasse 215
D-6700 Ludwigshafen (DE)
Erfinder : Jakusch, Helmut, Dr.
Lorscher Ring 6C
D-6710 Frankenthal (DE)

**Beschreibung**

Die Erfindung betrifft ein Verfahren zur Herstellung von gut dispergierbarem hochkoerzitivem hexagonalem Barimferrit mit einer Teilchengröße kleiner 0,2 μm, einer spezifischen Oberfläche nach BET ($SN_2$) von mindestens 10 m²/g und einer Schaltfeldverteilung ($h_{25}$) von kleiner 0,3 sowie seine Verwendung zur herstellung von magnetischen Aufzeichnungsträgern.

Die Ferritpulver für die Herstellung von Hartferritmagenten sowie von weitgehend fälschungssicheren magnetischen Aufzeichnungen werden üblicherweise nach dem keramischen Verfahren hergestellt. Dazu werden Bariumcarbonat bzw. Strontiumcarbonat und Eisenoxid in dem Verhältnis, das der chemischen Formel des späteren Ferrits entspricht, gemischt und diese Mischung einer Wärmebehandlung, dem sogenannten Vorsintern, bei Temperaturen zwischen 1 100 °C und 1 300 °C unterworfen. Beim Vorsintern bildet sich der magnetische Hexaferrit. Die Entstandenen versinterten Konglomerate aus Kristalliten werden anschließend meist unter Zusatz von Wasser zu einem Pulver, dessen Teilchengröße rund 1 μm beträgt, gemahlen. Durch das Mahlen entstehen Kristallbaufehler in den Teilchen, die eine Erniedrigung der Koerzitivität zur Folge haben. So hergestellte Ferritpulver weisen im allgemeinen eine recht gute spezifische remanente Magnetisierung auf, die Magnetisierungskoerzitivfeldstärke $_jH_c$ liegt aber mit etwa 200 kA/m vor dem Mahlen und ≤ 150 kA/m nach dem Mahlen recht niedrig. Diese durch das Mahlen hervorgerufenen Kristallbaudefekte lassen sich durch ein Tempern nach dem Mahlen oder durch einen Sinterprozeß nur zum Teil ausheilen. Deshalb zeigen die aus gemahlenem hartmagnetischem Bariumferritpulver hergestellten Magnete, wie sie in der Technik heute benutzt werden, $_jH_c$-Werte von nur 280 bis 320 kA/m. Außerdem weisen die gemahlenen Ferritpulver ein breites Teilchengrößenspektrum auf, so daß die unter Verwendung entsprechend erhaltener $BaFe_{12}O_{19}$-Pulver hergestellten magnetische Aufzeichnungsträger eine Schaltfeldverteilung ($h_{25}$) von größer 0,4 zeigen.

Ein anderes Verfahren wird z. B. in der DE-A-2 832 892 beschrieben. Hier wird eine Ba-Fe(III)-Nitralösung in einem Sprühturm gegen ein Heizgas mit einer Temperatur von 1 200 °C versprüht. An dem Verfahren ist nachteilig, daß das so hergestellte Ba-Ferritpulver mit α-$Fe_2O_3$ verunreinigt ist, wodurch Sättigungs- und remanente Magnetisierung gegenüber einphasigem Ferrit erniedrigt sind. Zum anderen sind die anfallenden Kristallite teilweise miteinander versintert, so daß das Pulver vor einer weiteren Verwendung aufgemahlen werden muß.

Neben den obengenannten Verfahren sind zur Herstellung von Barium- und Strontiumferriten auch Mischfällungsverfahren herangezogen worden. So beschreiben K. Haneda et al in J. Amer. Ceram. Soc. *57* (8) (1974) 354/7 die Darstellung von hochkoerzitivem Bariumferrit durch Tempern einer abfiltrierten, ausgewaschenen und getrockneten $BaCO_3$-$Fe(OH)_3$-Mischfällunt bei 925 °C. Die Mischfällung wurde durch Zusammengeben einer Ba-Fe(III)-Chloridlösung und einer NaOH-$Na_2$-$CO_3$-Lösung mit fast 4-fachem Alkaliüberschuß hergestellt. Ein weiteres Mischfällungsverfahren aus Ba-Fe(III)-Chloridlösung und gemäß bevorzugtes Ausführungsform überschüssiger $Na_2$-$CO_3$-Lösung wird in der DE-A-1 948 114 (US-A-3 582 266) offenbart. Das zusammen ausgefällte Ba und Fe(III)-Carbonat wird filtriert, ausgewaschen, sprühgetrocknet und bei 1 100 °C getempert. Der Überschuß an $Na_2CO_3$ dient dazu, um nach der Filtration eine wirksame entfernung von Salzanteilen zu ermöglichen. die erforderlichen hohen Temperaturen bei der Temperung ergeben jedoch grobteilige Ferritpulver mit einer Teilchengröße von 0,5-1;0 μm und $H_c$-Werten, die auch mit dem keramischen Verfahren erreicht werden können. Ein weiteres Mischfällungsverfahren ist aus der GB-A-1 254 390 (US-A-3 634 254) bekannt. Dabei wird von einer ammoniakalischen Ba-Fe(III)-Nitratlösung ausgegangen und mit einem Ammoniumsalz einer Fettsäure die Kationen ausgefällt. Auch hier ist eine Temperung mit den dadurch bedingten nachteiligen Folgen auf das Teilchengrößenspektrum erforderlich.

Diese genannten Verfahren haben den Nachteil, daß das in der flüssigen Phase erhaltene Mischfällungsprodukt zu feinteilig und daher nur sehr schwierig von der flüssigen Phase abzutrennen ist. Da hierbei außerdem das gefällte feinteilige Ba-Salz teilweise durchs Filter läuft, ist es schwierig, Fällungsprodukte mit einer Zusammensetzung zu erzielen, die den festgelegten Molverhältnissen der jeweiligen Komponenten entsprechen. Wegen dieser Mängel wurden diese Verfahren bisher gewerblich nicht realisiert. Weiterhin ist es nachteilig, daß die erhaltenen Ferrite aufgrund der Versinterung beim Tempern schlecht dispergierbar sind und für eine weitere Verwendung aufgemahlen werden müssen.

Um den Nachteil der schlechten Filtrierbarkeit zu beheben, wird in der DE-B-2 738 830 (US-A-4 120 807) vorgeschlagen, bei der Mischfällung ein grobteiliges $Fe_3O_4$ und $BaCO_3$ mit einer Teilchengröße von 0,5-0,7 μm zu erzeugen. Der nach dem Tempern bei 400 bis 900 °C entstehende Ba-Ferrit ist mit einem Kristallitdurchmesser von 0,5-0,9 μm relativ grobteilig und fällt z. T. in versinterter Form an.

Mischfällungen führen im allgemeinen zu einem innigen Kontakt der Reaktionskomponenten und bewirken so eine Reaktionsbeschleunigung. Andererseits sind auch Fluxverfahren bekannt, bei denen Flußmittel zur Förderung der Reaktion zwischen den einzelnen Metalloxiden eingesetzt werden, wie z. B. $B_2O_3$, Alkaliborate, PbO, Alkaliferrite, $Bi_2O_3$, Molybdate, Alkalihalogenide und -sulfate.

So wird nach der US-A-3 793 443 Bariumferrit

durch Erhitzen eines BaCO₃—Fe-OHH—NaCl—KCl-Gemenges dargestellt. Dabei wird es als wichtig angesehen, von FeOOH als Eisenkomponente auszugehen, um die Ferritbildungsreaktion in Gegenward von « in situ » erzeugtem $H_2O$ durchzuführen. Außerdem wird eine vollständige Ferritbildung nur oberhalb des Schmelzpunktes der zugegebenen Alkalichloride (d. h. bei 1 000 °C) beobachtet. Tiefere Temperaturen führen zu geringen Ba-Ferritausbeuten. Das Verfahren bringt gegenüber der keramischen Methode keine Verbesserung in der Koerzitivkraft. Außerdem fallen die Teilchen mit einem Kristallitdurchmesser von ca. 1-1,5 μm in relativ grobteiliger Form an. Nach dem Verfahren der DE-OS-2 401 029 (US-A-3 810 973) wird eine Suspension von Eisen(III)-oxid-Hydrat in einer Alkalichloridlösung mit BaCO₃-Pulver versetzt und dann sprühgetrocknet und bei 1 000-1 050 °C getempert. Das Verfahren führt zu einem relativ grobteiligen hexagonalen Ferrit mit einem Kristalldurchmesser von ca. 1-1,5 μm und zu $H_c$-Werten von 4 800-5 400 Oe. In der DE-OS-2 143 793 wird ein Verfahren zur Herstellung von Bariumferrit beschrieben, bei dem ein BaCO₃—Fe₂O₃—Na₂SO₄—K₂SO₄-Gemenge auf 900° bis 950 °C erhitzt wird, da bei dieser Reaktionstemperatur die beigemengten Alkalisulfate geschmolzen sind, um so eine flüssige Phase für den schnellen Transport der miteinander reagierenden Eisen- und Bariumverbindungen zu bilden.

Bei den beschriebenen Alkalichlorid- und Alkalisulfatfluxverfahren werden Salz-Ferrit-Gemenge erhalten, deren Salzanteil anschließend zur Isolierung des Ferrits durch Aufschlämmen in Wasser aufgelöst wird. Die Salz/Ferrit-Produkte fallen dabei als kompakte, massive und harte Schmelzkuchen mit vergleichsweise geringer Oberfläche an, deren Salzanteil sich ohne eine vorangehende Zerkleinerung bie Behandlung mit Wasser nur langsam auflösen kann. Außerdem ist es nachteilig, daß hohe Temperaturen von 950 bis 1 050 °C angewendet werden müssen.

Es bestand daher die Aufgabe, ein Verfahren zur Herstellung hexagonaler Ferrite bereitzustellen, das die geschilderten Nachteile weitgehend vermeidet und mit welchem ein Bariumferrit erhältlich ist, der insbesondere den Anforderungen genügt, welche an ein magnetisches Material für die Verwendung bei magnetischen Aufzeichnungsträgern gestellt werden. Ein solcher Bariumferrit sollte sich vor allem durch eine gute Dispergierbarkeit für die Einarbeitung in organische Bindemittel, eine hohe Feinteiligkeit bei enger Teilchengrößenverteilung, eine sehr hohe Koerzitivfeldstärke und eine enge Schaltfeldstärkenverteilung auszeichnen.

Es wurde nun überraschenderweise gefunden, daß sich ein Bariumferrit der Zusammensetzung $BaFe_{12}O_{19}$ in einfacher Weise mit den aufgabengemäß geforderten Eigenschaften herstellen läßt, wenn man in bekannter Weise eine wäßrige Lösung oder Suspension eines Bariumsalzes und einer wäßrigen Lösung eines Eisen(III) salzes mit einer wäßrigen Natriumcarbonat-Lösung umgesetzt, wobei jedoch die resultierende Mischung, bestehend aus schwerlöslichem Bariumsalz und Eisen (III) carbonat in einer Natriumsalzlösung zur Trockene gebracht, das trockene Salzgemenge anschließend auf eine Temperatur unterhalb des Schmelzpunktes des vorliegenden Natriumsalzes, mindestens jedoch auf 680 °C erhitzt und der sich dabei bildende feinteilige, plättchenförmige Bariumferrit dann aus dem Bariumferrit/Natriumsalzgemenge durch Auslaugen mit Wasser isoliert wird.

Zur Durchführung des erfindungsgemäßen Verfahrens hat es sich als vorteilhaft erwiesen, das Barium als Chlorid, Sulfat oder Carbonat und das Eisen als Chlorid oder Sulfat einzusetzen, so daß dann Natriumchlorid oder Natriumsulfat als Natriumsalzkomponente entsteht.

Wird von den Chloriden des Bariums und Eisens ausgegangen, so wird eine wäßrige BaCl₂-FeCl₃-Lösung mit einem Atomgewichtsverhältnis von Eisen zu Barium von 10 bis 12, insbesondere von 11,0 bis 11,5 unter Rühren in eine wäßrige Na₂CO₃-Lösung eingebracht. Die Konzentration der Na₂CO₃-Lösung wird so gewählt, daß sich in der Reaktionsmischung ein Atomgewichtsverhältnis von Natrium zu Chlorionen von 1,0 bis 1,3, insbesondere von 1,0 bis 1,2 ergibt. Nach dem Zusammenführen der Lösungen liegt eine Suspension von röntgenamorphem Barium- und Eisen (III) carbonat in einer Natriumchlorid-Lösung vor. Diese Suspension wird sprühgetrocknet und das erhaltene Pulver aus Barium und Eisen (III) carbonat sowie von Natriumchlorid bei einer Temperatur zwischen 680 und höchstens 800 °C, insbesondere zwischen 730 bis 770 °C, 0,5 bis 3 Stunden lang getempert. Dabei fällt ein Bariumferrit/Natriumchlorid-Gemenge als lockeres Pulver an, das leicht zwischen den Fingern zerrieben werden kann. Beim Aufschlämmen in Wasser wird das unzerkleinerte Produkt sofort durch und durch benetzt, so daß der Natriumchlorid-Anteil in kurzer Zeit aufgelöst ist. Es bleibt ein hellbraunes Bariumferritpräparat zurück, daß ohne Schwierigkeiten abfiltriert und mit Wasser ausgewaschen werden kann. Zum Teil liegen neben der Bariumferritphase noch geringe Menge an Bariumcarbonat vor, die aber bei der wäßrigen Behandlung der Ferrit/Natriumchlorid-Gemenge durch Zusatz von etwas Säure, z. B. Essigsäure, leicht entfernt werden können.

In ähnlicher Weise läßt sich das erfindungsgemäße Verfahren unter Verwendung Bariumcarbonat oder -sulfat sowie von Eisen (III) sulfat nutzen. Dabei wird von einer Suspension von Bariumcarbonat oder -sulfat in einer wäßrigen Natriumcarbonat-Lösung ausgegangen, in die eine wäßrige Eisen (III) sulfat-Lösung eingebracht wird. Die Mengenverhältnisse sind, bezogen auf die Atomgewichte, analog und zwar ein Verhälnis von Eisen zu Barium von 10 bis 12, insbesondere von 11,0 bis 11,5 und von Natrium zu Sulfation von 2,0 bis 2,6, insbesondere von 2,0 bis 2,4. Die resultierende Reaktionslösung wird sprühgetrocknet und das BaCO₃- bzw. BaSO₄-,

Eisen (III) carbonat und Natriumsulfat-haltige Pulver bei einer Temperatur zwischen 680 und höchstens 880 °C, insbesondere zwischen 730 und 840 °C 0,5 bis 3 Stunden lang getempert. Dabei fällt ein Ba-Ferrit/$Na_2SO_4$-Gemenge als lockeres voluminöses Pulver an, das leicht zwischen den Fingern zerrieben werden kann. Beim Aufschlämmen in Wasser wird das unzerkleinerte Produkt sofort durch und durch benetzt, so daß der $Na_2SO_4$-Anteil in kurzer Zeit aufgelöst ist. Es bleibt ein hellbraunes Bariumferritpräparat zurück, das bei einem eventuellen Barium-Überschuß geringfügig mit $BaSO_4$ verunreinigt sein kann. Der $BaSO_4$-Anteil ist im allgemeinen jedoch so feinteilig, daß er zu einem großen Teil bei der anschließenden Filtration durchs Filter läuft. Auch eine magnetische Abtrennung ist möglich.

In jedem Fall erhält man nach dem erfindungsgemäßen Verfahren ein feinkörniges, unversintertes Bariumferritpulver, das leicht zerrieben werden kann und für die weitere Verarbeitung nicht mehr aufgemahlen werden muß. Das Präparat besteht aus sehr kleinen Plättchen mit einer engen Teilchengrößenverteilung und einem Plättchendurchmesser von 0,1 bis 0,2 μm. Die spezifische Oberfläche beträgt je nach Temperungsbedingungen zwischen 10 und 25 $m^2$/g. Für die Koerzitivfeldstärke werden 400 bis 460 kA/m bei einer spzeifischen Remanenz von 35 bis 39 $nTm^3$/g bestimmt. Die Schaltfeldstärkenverteilung, angegeben als $h_{25}$-Wert, beträgt 0,2 bis 0,3. Der die Schaltfeldstärkenverteilung charakterisierende $h_{25}$-Wert wird jeweils aus der Gleichfeldentmagnetisierungskurve (Remanenzkurve) eines Pulvers oder eines Magnetbandes abgeleitet. Nach magnetischer Sättigung der Probe werden diejenigen Magnetfeldstärken in Gegenrichtung bestimmt, bei denen nach Anlegen und Abschalten des Feldes 25, 50 und 75 % der Magnetteilchen umgeschaltet haben. Bezeichnet man diese Feldstärken jeweils mit $H_{25}$, $H_{50}$ und $H_{75}$, so ist

$$h_{25} = (H_{75} - H_{25})/50.$$

Eine enge Schaltfeldstärkenverteilung drückt sich in einem niedrigen $h_{25}$-Werte aus.

Des weiteren zeichnet sich das erfindungsgemäße Verfahren gegenüber den bekannten Mischfällungs- oder Fluxverfahren zur Gewinnung von bariumferrit durch eine Reihe von verfahrenstechnischen Vereinfachungen aus. So entfällt das langwierige Abfilrieren der Mischfällungsprodukte und das vorgegebene Fe/Ba-Verhältnis bleibt unverändert, da keine Ba-Komponente durchs Filter laufen kann. Ebenfalls bedarf es keiner pH-Wert-Einstellung und -Kontrolle, da der pH-Wert durch die verwendeten Lösungen vorgegeben ist und nicht verändert werden muß. Auch kann auf die Anwendung von teueren NaCl/KCl- bzw. $Na_2SO_4$/$K_2SO_4$-Gemengen als Eluxmittel verzichtet werden.

Als ein wesentlicher Vorteil muß bei dem erfindungsgemäßen Verfahren die Temperung bei deutlich tieferen Temperaturen und zwar jeweils bei Temperaturen unterhalb des Schmelzpunktes des anwesenden natriumsalzes angesehen werden. Dadurch fallen nach dem Tempern der Salz-Ferrit-Gemenge keine harten Schmelzkuchen an, die für die Weiterverarbeitung erst aufgemahlen werden müssen und die schlecht von Wasser angegriffen werden, sondern das Salz/Ferrit-Pulver läßt sich leicht zerreiben und der Salzanteil wird schnell mit Wasser weggelöst. Damit sind die erfindungsgemäß erhältlichen Bariumferritpulver äußerst feinteilig und auch einheitlich in der Teilchengrößenverteilung, was neben den bereits angegebenen guten magnetischen eigenschaften auch im Hinblick auf ein verbessertes Dispergierverhalten zum Ausdruck kommt.

Wegen der besonders guten Dispergierbarkeit der auf die geschilderte Weise erhältlichen Bariumferritpulver sind sie besonders für die verwendung als magnetisches Material bei der herstellung von magnetischen Aufzeichnungsträgern geeignet. Dabei zefgt das Ferritpulver, verglichen mit den herkömmlichen Produkten, verbesserte magnetische Eigenschaften. Außerdem ist das erfindungsgemäß hergestellte Bariumferritpulver so feinteilig, daß die daraus hergestellten Magnetschichten auch bei geringen Schichtdicken eine hervorragende Oberflächergüte aufweisen. Bei der Verarbeitung zu magnetischen Aufzeichnungsträgern nimmt die Koerzitivfeldsgtärke um etwa 20 kA/m zu, so daß sehr hochkoerzitive magnetische Aufzeichnungsträger mit $H_c$-Werten von 420 bis 480 kA/m hergestellt werden können. Aufgrund dieser hohen $H_c$-Werte ist es schwierig, ein einmal vorgenommene magnetische Aufzeichnung wieder zu verändern. Außerdem sind die magnetischen Aufzeichnungen damig gegen Fremdfelder weitgehend unempfindlich und stabil und im gewissen Umfang auch fälschungssicher.

Die Erfindung sei anhand folgender Beispiele näher erlautet.

Beispiel 1

Es wird eine Lösung A, bestehend aus 139,6 g $BaCl_2 \cdot 2\ H_2O$ und 1 776,4 g $FeCl_3 \cdot 6\ H_2O$ in 8 l Wasser hergestellt und unter Rühren in eine Lösung von 1 105,5 g $Na_2CO_3$ in 11 l Wasser gegeben. Der pH-Wert der Mischung beträgt 5,5. Danach wird die erhaltene suspension sprühgetrocknet. Das Sprühgetrocknete Pulver wird anschließend eine Stunde lang in einem vorgewärmten Kammerofen bei 750 °C an Luft getempert. nach dem Abkühlen liegt ein Ba-$Fe_{12}O_{19}$/NaCl-Gemenge vor, das leicht zwischen den Fingern zerrieben werden kann. Dieses wird unter Rühren in kaltes Wasser gegeben, wobei sich der NaCl-Anteil des Gemenges in kurzer Zeit auflöst. Anschließend wird der braune Ferrit abfiltriert, ausgewaschen und getrocknet. Das im Röntgendiagramm einphasige $BaFe_{12}O_{19}$-Präparat besteht aus Kristallplättchen mit engem Teilchengrößenspektrum und einem Plättchendurchmesser von 0,1 bis 0,2 μm und einer

spezifischen Oberfläche von 12,8 $m^2/g$. Die Magnetwerte betragen : $H_c$ = 417 kA/m, $M_r/S$ = 38 $nTm^3/g$. Der $h_{25}$-Wert beträgt 0,21.

### Beispiel 2

Eine Lösung A entsprechend Beispiel 1 wird unter Rühren in eine Lösung 1 326,6 g $Na_2CO_3$ in 12 l Wasser gegeben. Der pH-Wert der Mischung beträgt 6,9. Die weitere Verarbeitung der resultierenden suspension erfolgt wie in Beispiel 1 beschrieben. Das erhaltene Bariumferritpräparat besitzt einen Plättchendurchmesser von 0,1 bis 0,2 µm und eine spezifische Oberfläche von 18,2 $m^2/g$. Die Magnetwerte waren $H_c$ = 465 kA/m, $M_r/S$ = 35 $nTm^3/g$, $h_{25}$ = 0,19.

### Beispiel 3

Mit Hilfe eines hochtourigen Rührers werden 233,4 g $BaSO_4$ in einer Lösung von 2 040,3 g $Na_2CO_3$ in 7 l Wasser dispergiert (Dispersion A). Außerdem wird eine Lösung von 2 730,3 g $Fe_2(SO_4)_3 \cdot 5,36\ H_2O$ in 18 l Wasser hergestellt (Lösung B). Daraufhin wird die Lösung B unter Rühren in die dispersion A eingebracht und die erhaltene suspension sprühgetrocknet. Das sprühgetrocknete Pulver wird anschließend 1 Stunde lang in einem vorgewärmter Kammerofen bei 830 °C an der Luft getempert. Nach dem Abkühlen liegt ein $BaFe_{12}$-$O_{19}/Na_2SO_4$-Gemenge vor, das leicht zwischen den Fingern zerrieben werden kann. Dieses wird unter Rühren in kaltes Wasser gegeben, wobei sich der $Na_2SO_4$-Anteil des Gemenges in kurzer Zeit auflöst. Anschließend wird der braune Ferrit abfiltriert, ausgewachen und getrocknet. Wie das Röntgendiagramm zeigt, liegt $BaFe_{12}O_{19}$ vor, das mit geringen Mengen $BaSO_4$ verunreinigt ist. Die Magnetwerte betragen : $H_c$ = 420 kA/m, $Mr/S$ = 39 $nTm^3/g$. Die Schaltfeldverteilung beträgt 0,24. Das Präparat besteht aus Kristallplättchen mit einem Plättchendurchmesser von 0,1 bis 0,2 µm und einer spezifischen Oberfläche $S_{N_2}$ = 12,7 $m^2/g$.

### Beispiel 4

Mit Hilfe eines hochtourigen Rührers werden 197,4 g $BaCO_3$ in 2 l Wasser dispergiert. Daneben werden zwei Lösungen hergestellt :

Lösung A :     2 040,3 g $Na_2CO_3$ in 7 l Wasser und

Lösung B :     2 730,3 g $Fe_2(SO_4)_3 \cdot 5,36\ H_2O$ in 18 l Wasser.

Anschließend wird Lösung A in Lösung B unter Rühren eingebracht und dann die $BaCO_3$-Dispersion dazugegeben. Die erhaltene wäßrige Suspension wird wie in Beispiel 3 beschrieben weiterbehandelt.

Das erhaltene Bariumferritpräparat weist einen Plättchendurchmesser von 0,1 bis 0,2 µm und eine spezifische Oberfläche von 14,2 $m^2/g$ auf und besitzt folgende Magnetwerte : $H_c$ = 410 kA/m, $M_r/S$ = 38 $nTm^3/g$. Die Schaltfeldverteilung $h_{25}$ beträgt 0,24.

### Beispiel 5

400 Teile eines gemäß Beispiel 1 hergestellten Bariumferritpulvers mit $H_c$ = 420 kA/m werden mit 100 Teilen einer 20 %igen Lösung eines Copolymerisats aus 80 % Vinylchlorid, 10 % Dimethylmaleinat und 10 % Diäthylmaleinat in einem Gemisch aus gleichen Teilen Tetrahydrofuran und Dioxan, 103 Teilen einer 13 %igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 24 Teilen eines handelüblichen anionenaktiven Netzmittels auf Basis Phosphorsäureester und 231 Teilen des genannten Lösungsmittelgemisches gemischt und 6 Stunden lang in einer Schüttelkugelmühle mit Hilfe von Stahlkugeln mit einem Durchmesser von 2 mm dispergiert. Danach wird mit 199 Teilen der oben erwähnten 13 %igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 35 Teilen des genannten Lösungsmittelgemisches, 0,3 Teilen Stearinsäure, 0,3 Teilen eines handelsüblichen Silikonöls und 0,6 Teilen Hydrochinon versetzt und weitere 2 Stunden dispergiert. Danach wird die Dispersion filtriert und in bekannter Weise auf eine 6 µm dicke Polyäthylenterephtalatfolie in einer solchen Stärke aufgetragen, daß nach dem Ausrichten der plättchenförmigen Teilchen durch Vorbeiführen an einem Magnetfeld und anschließendem Trocknen und Kalandrieren eine Magnetschicht mit einer Schichtdicke von 7,1 µm verbleibt.

Am Magnetband wurden folgende Werte gemessen :

$H_c$ = 443 kA/m, $M_r$ = 70 mT, $M_s$ = 106 mT, Richtfaktor = 1,2, $h_{25}$ = 0,18.

### Patentansprüche

1. Verfahren zur Herstellung von Bariumferrit der Zusammensetzung $BaFe_{12}O_{19}$, wobei eine wäßrige Lösung oder Suspension eines Bariumsalzes und eine wäßrige Lösung eines Eisen (III)-salzes mit einer wäßrigen Natriumcarbonat-Lösung umgesetzt wird, dadurch gekennzeichnet, daß die resultierende Mischung, bestehend aus schwerlöslichem Bariumsalz und Eisen (III) carbonat in einer Natriumsalzlösung zur Trockene gebracht, das trockene Salzgemenge anschließend auf eine Temperatur unterhalb des Schmelzpunktes des vorliegenden Natriumsalzes, mindestens jedoch auf 680 °C erhitzt und der sich dabei bildende feinteilige, plättchenförmige Bariumferrit dann aus dem Bariumferrit-/Natriumsalzgemenge durch Auslaugen mit Wasser isoliert wird.

2. Verfahren gemäß Anspruch 1, dadurch gekennzeichnet, daß Bariumchlorid und Eisen (III)-Chlorid eingesetzt werden, so daß als Natriumsalzkomponente Natriumchlorid anfällt und daß die Temperung bei einer Temperatur zwischen 680 und 800 °C durchgeführt wird.

3. Verfahren gemäß Anspruch 1, dadurch gekennzeichnet, daß BaCO₃, oder BaSO₄ und Eisen (III)-Sulfat eingesetzt werden, so daß als Natriumsalzkomponente Natriumsulfat anfällt und daß die Temperung bei einer Temperatur zwischen 680 und 880 °C durchgeführt wird.

## Claims

1. A process for the preparation of barium ferrite of the formula $BaFe_{12}O_{19}$, an aqueous solution or suspension of a barium salt and an aqueous solution of an iron (III) salt being reacted with an aquous sodium carbonate solution, wherein the resulting mixture, consisting of sparingly soluble barium salt and iron (III) carbonate, in a sodium salt solution, is brought to dryness, the dry salt mixture is then heated to a temperature below the melting point of the sodium salt present, but to not less than 680 °C, and the resulting finely divided, platelet-shaped barium ferrite is then isolated from the barium ferrite/sodium salt mixture by leaching with water.

2. A process as claimed in claim 1, wherein barium chloride and iron (III) chloride are employed, so that sodium chloride is formed as the sodium salt component, and heating is effected at from 680 to 800 °C.

3. A process as claimed in claim 1, wherein $BaCO_3$ or $BaSO_4$ and iron (III) sulfate are employed, so that sodium sulfate is formed as the sodium salt component, and heating is effected at from 680 to 880 °C.

## Revendications

1. Procédé de préparation de ferrite de baryum de la composition $BaFe_{12}O_{19}$, par réaction d'une solution ou suspension aqueuse d'un sel de baryum et d'une solution aqueuse d'un sel de fer (III) avec une solution aqueuse de carbonate de sodium, caractérisé par le fait que l'on amène à siccité le mélange résultant, constitué de sel de baryum difficilement soluble et le carbonate de fer (III) dans une solution de sel de sodium, on chauffe ensuite la quantité de sel sèche à une température inférieure au point de fusion du sel de sodium présent, mais toutefois au moins à 680 °C, et on isole alors de la quantité de ferrite de baryum/sel de sodium, par lessivage avec de l'eau, le ferrite de baryum, en forme de plaquettes, finement divisé, qui s'y forme.

2. Procédé selon la revendication 1, caractérisé par le fait qu'on met en réaction du chlorure de baryum et du chlorure de fer (III) de manière à ce qu'il se forme, comme composant sel de sodium, du chlorure de sodium et qu'on opère la mise en équilibre de température à une température comprise entre 680 et 880 °C.

3. Procédé selon la revendication 1, caractérisé par le fait qu'on met en réaction du $BaCO_3$ ou $BaSO_4$ et du sulfate de fer (III) de manière à ce qu'il se forme, comme composant sel de sodium, du sulfate de sodium et que l'on opère la mise en équilibre de température à une température comprise entre 680 et 880 °C.